# EUROPÄISCHE PATENTSCHRIFT

(11) **EP 2 469 118 B1**
(45) Veröffentlichungstag und Bekanntmachung des Hinweises auf die Patenterteilung: **27.04.2016**
(21) Anmeldenummer: 11193951.8
(22) Anmeldetag: 16.12.2011
(51) Int. Cl.: F16D 65/18, F16D 65/00, F16J 3/04, F16D 125/12

(54) **Scheibenbremse**
Disc brake
Frein à disque

(30) Priorität: 22.12.2010 DE 102010055690
(43) Veröffentlichungstag der Anmeldung: 27.06.2012
(73) Patentinhaber: KNORR-BREMSE Systeme für Nutzfahrzeuge GmbH, 80809 München (DE)
(72) Erfinder: Asen, Alexander, 94474 Vilshofen (DE)
(74) Vertreter: Mattusch, Gundula

(56) Entgegenhaltungen:
- DE-A1- 10 322 834
- DE-A1- 10 330 633

## Beschreibung

Die Erfindung betrifft eine Scheibenbremse gemäß dem Oberbegriff des Anspruchs 1.

Eine ähnliche Scheibenbremse ist aus Druckschrift DE 103 22834 bekannt.

Zum Schutz von in einem Aufnahmeraum des Bremssattels angeordneten funktionsrelevanten Bauteilen, wie einer Zuspanneinrichtung oder dergleichen, vor Korrosion durch Witterungseinflüsse, ist der Aufnahmeraum auf der Seite, die bei einer Schiebesattelbremse dem zuspannseitigen Bremsbelag zugeordnet ist, durch einen Verschlussdeckel weitgehend verschlossen.

Stellspindeln, die mittels der Zuspanneinrichtung gegen den Bremsbelag drückbar sind, sind durch Öffnungen des Verschlussdeckels geführt, die jeweils umfänglich durch einen abgewinkelten, axial ausgerichteten Kragen begrenzt sind.

Der Durchtrittsbereich jeder Stellspindel ist durch einen Faltenbalg abgedichtet, der einerseits an der Stellspindel dichtend anliegt und andererseits am Verschlussdeckel befestigt ist, wobei der Faltenbalg mit einem Endbereich ausschließlich reibschlüssig an der Innenseite des Kragens anliegt.

Quasi als redundantes Dichtungselement kommt eine sogenannte Sekundärdichtung zum Einsatz, die in Richtung des Aufnahmeraumes dem Faltenbalg nachgeordnet ist und durch die bei einem möglichen Versagen des Faltenbalgs der Aufnahmeraum vor grobem Schmutz geschützt wird.

Diese, konzentrisch zum Faltenbalg angeordnete Sekundärdichtung liegt dichtend an der Stellspindel an und ist formschlüssig am Kragen des Verschlussdeckels gehalten. Hierzu sind bei den bekannten Konstruktionen entsprechende Ausformungen des Kragens vorgesehen, in die daran angepasste Haltemittel der Sekundärdichtung eingreifen.

Die vielfach sickenförmig gestalteten Ausformungen des Kragens sind allerdings nur mit erheblichem fertigungstechnischem Aufwand herstellbar, die üblicherweise bei dem aus Blech bestehenden Verschlussdeckel durch Stanzen eingebracht wird. Die relativ komplizierte Sickenkontur steht jedoch einer einfachen und kostengünstigen Herstellung entgegen, wozu auch die Bereitstellung entsprechend aufwändiger Werkzeuge zu rechnen ist.

Während der gebildete Formschluss zwischen dem Kragen und der Sekundärdichtung zur Fixierung in radialer Richtung dient, ist eine axiale Sicherung der Sekundärdichtung durch den Faltenbalg gegeben, der im Anlagebereich mit dem Kragen einen Verstärkungsring aus Metal aufweist, an dem dann die Sekundärdichtung anliegt.

Gerade bei einem Defekt des Faltenbalges, der unter Umständen zu dessen Lösen aus der Befestigung mit dem Verschlussdeckel führt, ist die axiale Sicherung der Sekundärdichtung nicht gewährleistet, so dass diese ihre vorbestimmte Aufgabe, nämlich, wie erwähnt, eine Abdichtung des Aufnahmeraumes im Falle des Dichtversagens des Faltenbalges zu gewährleisten, nicht entsprechen kann.

Der Erfindung liegt die Aufgabe zugrunde, eine Scheibenbremse der gattungsgemäßen Art so weiterzuentwickeln, dass die Sekundärdichtung einfacher und damit kostengünstiger herstellbar ist und ihre Funktionssicherheit verbessert wird.

Diese Aufgabe wird durch eine Scheibenbremse mit den Merkmalen des Anspruchs 1 gelöst.

Durch das erfindungsgemäße Anspritzen der als Kunststoffteil ausgebildeten Sekundärdichtung an den Kragen des metallischen Verschlussdeckels, kann auf das Einbringen von Sicken in den Kragen verzichtet werden, wodurch sich eine durchaus bemerkenswerte Kostenreduzierung bei der Herstellung ergibt.

Während bislang die Sekundärdichtung als separates Teil hergestellt und anschließend montiert wurde, kann auf den Arbeitsschritt der Montage ebenfalls verzichtet werden, was sich naturgemäß kostenmindernd auswirkt.

Das Anspritzen der Sekundärdichtung, das auch unter dem Begriff "Outsert-Technik" bekannt ist, kann mit geringem fertigungstechnischen Aufwand erfolgen.

Bevorzugt ist die Sekundärdichtung aus einem formstabilen, d.h., entsprechend steifen Kunststoff hergestellt, wodurch auf den Einsatz eines Stützringes im Anlagebereich an der Stellspindel verzichtet werden kann, wie dies bisher erforderlich war, da die Sekundärdichtung vornehmlich aus einem Elastomer bestand.

Um eine ausreichende Dichtung zwischen der Stellspindel und der topfartig gestalteten formsteifen Sekundärdichtung zu erreichen, ist in deren Anlagebereich mit der Stellspindel eine elastische Dichtlippe vorgesehen, die zweckmäßigerweise an die Sekundärdichtung anvulkanisiert ist.

Die Höhe des Kragens wird nun ausschließlich bestimmt von der notwendigen Anlagefläche des Faltenbalges, so dass sich daraus eine Materialeinsparung ergibt, ebenso wie aus dem nun möglichen Verzicht auf eine radial nach innen gerichtete Abwinkelung des Kragens, an der bislang die Sekundärdichtung im Sinne einer Aufhängung gehalten war.

Da Scheibenbremsen als Serienteile in großen Stückzahlen zum Einsatz kommen, stellt jede Materialeinsparung eine insbesondere wirtschaftliche Verbesserung dar.

Im Übrigen kann ein gemäß der Erfindung modifizierter Verschlussdeckel nachträglich in eine Scheibenbremse eingesetzt werden, beispielsweise bei Wartungs- und/oder Reparaturarbeiten, so dass die sich hinsichtlich der Funktionsverbesserung ergebenden Vorteile auch bei bereits im Betrieb befindlichen Scheibenbremsen wirksam werden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer Scheibenbremse in einer geschnittenen Draufsicht
- Figur 2: einen Ausschnitt der Scheibenbremse nach Figur 1 in einer vergrößerten Darstellung
- Figur 3: eine Einzelheit der Scheibenbremse in einer vergrößerten geschnittenen Seitenansicht.

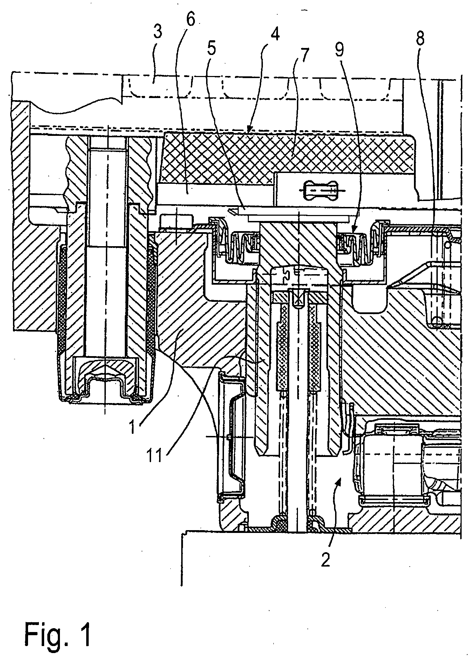

In der Figur 1 ist eine Hälfte einer pneumatisch oder elektromotorisch betätigbaren Scheibenbremse dargestellt, die einen als Schiebesattel ausgebildeten Bremssattel 1 aufweist, der eine Bremsscheibe 3 in ihrem oberen Umfangsbereich umfasst.

Zu beiden Seiten der Bremsscheibe 3 sind Bremsbeläge 4 angeordnet, von denen hier ein aktionsseitiger dargestellt ist, die in Funktion, also bei einer Bremsung, gegen die Bremsscheibe 3 pressbar sind.

Der Bremsbelag 4 besteht aus einer Trägerplatte 6 und einem auf dessen der Bremsscheibe 3 zugewandten Seite befestigten Belag 7.

Über eine in einem Aufnahmeraum des Bremssattels angeordnete, mittels eines Drehehebels betätigbar Zuspanneinrichtung 2 wird eine Stellspindel 11 über ein angeschlossenes Druckstück 5 gegen den Bremsbelag 4 gedrückt. Anstelle der stirnseitigen Anbindung des Druckstücks 5 an der Stellspindel 11 kann das Druckstück 5 auch fest mit der Trägerplatte 6 verbunden sein.

Zur Einstellung eines verschleißbedingten Lüftspiels zwischen dem Reibbelag 7 und der Bremsscheibe 3 ist die als Gewindespindel ausgebildete Stellspindel 11 drehbar im Bremssattel gelagert und über eine nicht dargestellte Nachstelleinrichtung bewegbar.

Der Bremssattel 1 ist auf seiner der Bremsscheibe 3 zugewandten Seite weitgehend durch einen Verschlussdeckel 8 verschlossen, der im Austrittsbereich der Stellspindel 11 eine durch einen zum Aufnahmeraum hin axial ausgerichteten Kragen 12 begrenzte Öffnung aufweist.

Zur Abdichtung der Öffnung ist ein am Kragen 12 anliegender Faltenbalg 9 vorgesehen, der mit seinem anderen Ende an der Stellspindel 11 anliegt.

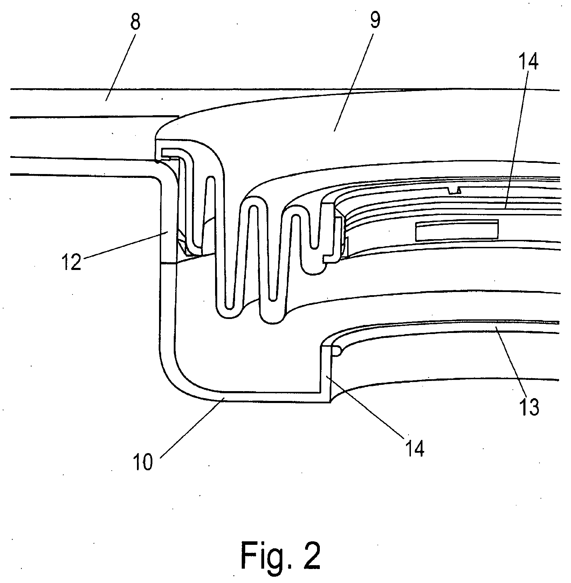

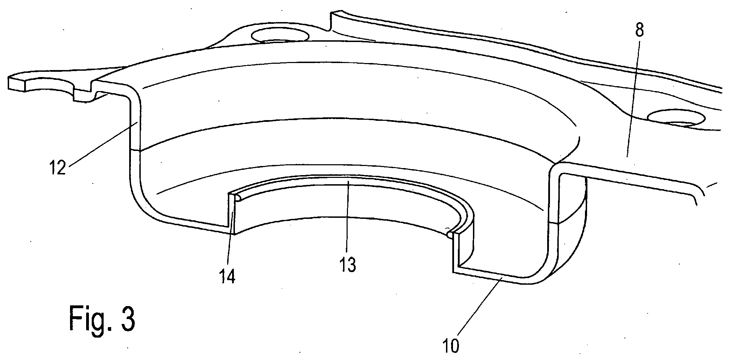

In Richtung des Aufnahmeraumes, dem Faltenbalg 9 nachgeordnet und zu diesem konzentrisch verlaufend, ist eine topfförmige Sekundärdichtung 10 vorgesehen, die erfindungsgemäß als Kunststofffeil an den Kragen 12 des metallischen Verschlussdeckels 8 angespritzt ist, wobei diese Art der Fertigung unter dem Begriff "Outsert-Technik" bekannt ist. Wie insbesondere in den Figuren 2 und 3 erkennbar ist, erstreckt sich die umfängliche Wandung der Sekundärdichtung 10 axial gleichgerichtet und in einer Rotationsebene mit dem Kragen 12.

An einen axial sich erstreckenden konzentrischen Stützrand 14 der Sekundärdichtung 10 ist eine Dichtlippe 13 aus einem elastischen Material befestigt, vorzugsweise durch Anvulkanisieren, die in Funktion dichtend an der Stellspindel 11 anliegt.

Während die Figur 3 die fertigungstechnisch als eine Baueinheit anzusehende Kombination Verschlussplatte 8/Sekundärdichtung 10 als Einzelheit gezeigt ist, ist in der Figur 2 das durch den eingesetzten Faltenbalg 9 komplettierte Dichtungssystem dargestellt. Darin ist erkennbar, dass die Höhe des Kragens 12 ausschließlich bestimmt wird durch die Breite der Anlagefläche des Faltenbalges 9 am Kragen 12.

Bevorzugt besteht die Sekundärdichtung 10 in der Hauptsache aus einem formstabilen, d.h., steifen Kunststoff, so dass im Bereich der Abdichtung gegenüber der Stellspindel 11 auf den Einsatz eines Stützringes verzichtet werden kann, wie dies für die Anbindung des Faltenbalges 9 am Kragen 12 erforderlich ist, der dort reibschlüssig gehalten ist.

### Bezugszeichenliste

- 1: Bremssattel
- 2: Zuspanneinrichtung
- 3: Bremsscheibe
- 4: Bremsbelag
- 5: Druckstück
- 6: Trägerplatte
- 7: Reibbelag
- 8: Verschlussdeckel
- 9: Faltenbalg
- 10: Sekundärdichtung
- 11: Stellspindel
- 12: Kragen
- 13: Dichtlippe
- 14: Stützrand

## Patentansprüche

1. Scheibenbremse, mit einem Bremssattel (1), in dem zwei in Funktion gegen eine Bremsscheibe (3) pressbare Bremsbeläge (4) angeordnet sind, von denen ein aktionsseitiger über mindestens eine Stellspindel (11) mittels einer Zuspanneinrichtung (2) betätigbar ist, und die Stellspindel (11) durch eine durch einen abgewinkelten Kragen (12) begrenzte Öffnung eines Verschlussdeckels (8) geführt ist, der einen Aufnahmeraum des Bremssattels (1) verschließt, wobei zur Abdichtung des Aufnahmeraums ein Faltenbalg (9) an der Stellspindel (11) und andererseits mit einem Randbereich am Kragen (12) anliegt, an dem des Weiteren eine konzentrisch zum Faltenbalg (9) angeordnete, an der Stellspindel (11) anliegende Sekundärdichtung (10) gehalten ist, **dadurch gekennzeichnet, dass** die topfartig gestaltete Sekundärdichtung (10) als Kunststoffteil an den Kragen (12) des metallischen Verschlussdeckels (8) angespritzt ist.

2. Scheibenbremse nach Anspruch 1, **dadurch gekennzeichnet, dass** die Sekundärdichtung (10) im Wesentlichen aus einem formstabilen Kunststoff besteht.

3. Scheibenbremse nach Anspruch 1 oder 2, **dadurch gekennzeichnet, dass** die Sekundärdichtung (10) einen axial ausgerichteten Stützrand (14) aufweist, an dem eine an der Stellspindel (11) dicht anliegende Dichtlippe (13) befestigt ist.

4. Scheibenbremse nach Anspruch 3, **dadurch gekennzeichnet, dass** die Dichtlippe (13) anvulkanisiert ist.

5. Scheibenbremse nach einem der vorhergehenden Ansprüche, **dadurch gekennzeichnet, dass** die Höhe des Kragens (12) etwa der Anlagefläche des Faltenbalges (9) entspricht.

6. Scheibenbremse nach einem der vorhergehenden Ansprüche, **dadurch gekennzeichnet, dass** sich eine konzentrische Wandung der Sekundärdichtung (10) gleichgerichtet an den Kragen (12) anschließt.

7. Scheibenbremse nach Anspruch 6, **dadurch gekennzeichnet, dass** die zum Kragen (12) gleichgerichtete Wandung der Sekundärdichtung (10) in gleicher Rotationsebene wie der Kragen (12) verläuft.

## Claims

1. Disc brake comprising a brake calliper (1), wherein two brake linings (4) are arranged which are suitable for being pressed, in operation, against a brake disc, whereof one lining, on the operating side, can be operated via at least one adjusting spindle (11) by means of a brake application device (2), and wherein said adjusting spindle (11) is passed through an opening of a closing cover (8), that is limited by an angled collar (12), with said closing cover closing an accommodating space of said brake calliper (1), and wherein, for sealing of said accommodating space, a bellows (9) bears against said adjusting spindle (11), on the one hand, and, on the other side, by an edge region against said collar (12), where a secondary seal (10) is moreover held, which is concentrically arranged relative to said bellows (9) and bears against said adjusting spindle (11), **characterised in that** said pot-shaped secondary seal is applied by injection as plastic part to said collar (12) of said metal closing cover (8).

2. Disc brake according to Claim 1, **characterised in that** said secondary seal (10) consists essentially of a dimensionally stable synthetic material.

3. Disc brake according to Claim 1 or 2, **characterised in that** said secondary seal (10) comprises an axially oriented supporting edge (4) on which a sealing lip (13) is fastened which is closely bearing against said adjusting spindle (11).

4. Disc brake according to Claim 3, **characterised in that** said sealing lip (13) is applied by vulcanisation.

5. Disc brake according to any of the preceding Claims, **characterised in that** the height of said collar (12) corresponds approximately to the bearing surface of said bellows (9).

6. Disc brake according to any of the preceding Claims, **characterised in that** a concentric wall of said secondary seal joints said collar (12) in the same orientation.

7. Disc brake according to Claim 6, **characterised in that** said wall in the same orientation as said collar (12) of said secondary seal (10) extends in the same plane of rotation as said collar (12).

## Revendications

1. Frein à disque comprenant un étrier de frein (1), dans lequel deux garnitures de frein (4) sont disposées, qui sont aptes à être pressé, en fonction, contre un disque de frein, dont une garniture, du côté d'actionnement, est actionnable via au moins une broche de réglage (11) au moyen d'un dispositif de serrage (2), et dans lequel ladite broche de réglage (11) est passée à travers d'une ouverture d'un couvercle de fermeture (8), qui est limitée par un col angulé (12), audit couvercle de fermeture fermant un espace récepteur dudit étrier de frein (1), et dans lequel, pour l'étanchéité dudit espace récepteur, un soufflet (9) porte contre ladite broche de réglage (11), d'un côté, et, d'autre côté, par une région de bord audit col (12), où un joint d'étanchéité secondaire (10) est maintenue, au plus, qui est disposé en position concentrique par rapport audit soufflet (9) et porte contre ladite broche de réglage (11), **caractérisé en ce que** ledit joint d'étanchéité secondaire en forme de pot est moulé par injection en tant que pièce en matière plastique audit col (12) dudit couvercle de fermeture (8) métallique.

2. Frein à disque selon la revendication 1, **caractérisé en ce que** ledit joint d'étanchéité secondaire (10) consiste essentiellement en une matière plastique ayant une forme stable.

3. Frein à disque selon la revendication 1 ou 2, **caractérisé en ce que** ledit joint d'étanchéité secondaire (10) comprend un bord de support (4) à orientation axiale, auquel une lèvre d'étanchéité (13) est fixée, qui se trouve en appui étanche contre ladite broche de réglage (11).

4. Frein à disque selon la revendication 3, **caractérisé en ce que** ladite lèvre d'étanchéité (13) est moulée par vulcanisation.

5. Frein à disque selon une quelconque des revendications précédentes, **caractérisé en ce que** la hauteur dudit col (12) correspond environ à l'aire de support dudit soufflet (9).

6. Frein à disque selon une quelconque des revendications précédentes, **caractérisé en ce qu'**une paroi concentrique dudit joint d'étanchéité secondaire se joigne audit col (12) en même orientation.

7. Frein à disque selon la revendication 6, **caractérisé en ce que** ladite paroi en même orientation que ledit col (12) dudit joint d'étanchéité secondaire (10) s'étend dans le même plan de rotation que ledit col (12).
